# EUROPÄISCHE PATENTANMELDUNG

(11) **EP 1 959 674 A1**
(43) Veröffentlichungstag der Anmeldung: **20.08.2008**
(21) Anmeldenummer: 07002765.1
(22) Anmeldetag: 08.02.2007
(51) Int. Cl.: H04N 5/217

(54) **Kamera und Verfahren zu deren Betrieb**

(71) Anmelder: Texmag GmbH Vertriebsgesellschaft, 8800 Thalwil (CH)
(72) Erfinder: Eisen, Jürgen, 86199 Augsburg (DE)
(74) Vertreter: Witzany, Manfred

(57) **Zusammenfassung**

Eine Kamera (1) weist fotoelektrische Wandler (6) auf, die auftxeffendes Licht mit Übertragungsfunktionen in elektrische Signale umwandeln. Um diese Kamera (1) auch zu Meßzwecken anwenden zu können, weist die Kamera (1) mindestens eine diffuse Lichtquelle (10) auf, die wenigstens einen Teil der fotoelektrischen Wandler (6) beaufschlagen kann. Die fotoelektrischen Wandler (6) stehen mit einer Recheneinheit (12) in Wirkverbindung, die aus den gewonnenen elektrischen Signalen wenigstens eine charakteristische Eigenschaft der Übertragungsfunktion der fotoelektrischen Wandler (6) berechnet. Auf diese Weise können Unterschiede in den Übertragungsfunktionen ausgeglichen und die elektrischen Signale somit zu Meßzwecken genutzt werden.

## Beschreibung

Aus der DE 10 2004 048 914 B1 ist eine Kamera bekannt, die ein Objektiv und einen CCD-Chip aufweist. Der CCD-Chip weist eine Reihe von Fotodioden auf, die auftreffendes Licht in eine elektrische Spannung umwandeln. Diese elektrischen Signale werden ladungsgetaktet seriell aus dem CCD-Chip ausgegeben. Diese Kamera hat sich insbesondere zur Erfassung von laufenden Warenbahnen bewährt und bildete den Ausgangspunkt der vorliegenden Erfindung.

Der Erfindung liegt die Aufgabe zugrunde, eine Kamera sowie ein Betriebsverfahren für diese Kamera zu schaffen, die sich durch eine verbesserte Meßgenauigkeit der auftreffenden Beleuchtungsstärke auszeichnen.

Diese Aufgabe wird erfindungsgemäß mit den Verfahrensschritten des Patentanspruchs 1 sowie mit den Merkmalen des Patentanspruchs 7 gelöst.

Das Verfahren gemäß Anspruch 1 dient zum Betrieb einer. Kamera mit fotoelektrischen Wandlern. Die fotoelektrischen Wandler werden vorzugsweise von Fotodioden oder Fototransistoren gebildet, wobei der Erfindungsgegenstand nicht hierauf beschränkt ist. Wichtig ist lediglich, daß die fotoelektrischen Wandler in der Lage sind, auftreffendes Licht in elektrische Signale umzuwandeln. Jeder fotoelektrische Wandler besitzt dabei eine ihm eigene Übertragungsfunktion, so daß aus der Verteilung der elektrischen Signale über die einzelnen fotoelektrischen Wandler nicht direkt auf die Verteilung der empfangenen Leuchtdichte geschlossen werden kann. Es hat sich herausgestellt, daß im Proportionalitätsfaktor dieser Übertragungsfunktion von Wandler zu Wandler eine typische Ungenauigkeit von circa +/-5 % besteht. Diese Ungenauigkeit ist in meßtechnischen Applikationen in der Regel nicht tolerierbar, wenn es beispielsweise darum geht, Strukturen mit geringem Kontrast sicher zu erfassen. Zu diesem Zweck werden die fotoelektrischen Wandler wenigstens zum Teil mit diffusem Licht beaufschlagt, wobei vorzugsweise alle fotoelektrischen Wandler in etwa gleichmäßig ausgeleuchtet werden. Die charakteristischen Eigenschaften der Übertragungsfunktion der einzelnen fotoelektrischen Wandler gehen dabei nicht nur in das Abbildungsverhalten, sondern auch in das Verhalten gegenüber dem zusätzlichen diffusen Licht ein. Daher kann durch entsprechende Rechenfunktionen aus den elektrischen Signalen mit und ohne diffuse Beleuchtung wenigstens eine charakteristische Eigenschaft der Übertragungsfunktion der fotoelektrischen Wandler berechnet werden. Mit Hilfe dieser Information kann dann das real aufgenommene Kamerabild entsprechend korrigiert werden. Die Korrektur selber muß dabei nicht unbedingt innerhalb der Kamera erfolgen. Insbesondere ist auch daran gedacht, zur Reduktion der erforderlichen Rechenleistung innerhalb der Kamera nur die Rohbilddaten zusammen mit den gewonnenen charakteristischen Eigenschaften der fotoelektrischen Wandler auszugeben, so daß nachfolgende Applikationen zumindest in der Lage sind, diese Rohdaten erforderlichenfalls zu korrigieren.

Als charakteristische Eigenschaft der Übertragungsfunktion, die auf diese Weise ermittelbar ist, kommt gemäß Anspruch 2 insbesondere eine Empfindlichkeit, ein Dunkelsignal bzw. eine Farbabhängigkeit der einzelnen fotoelektrischen Wandler in Betracht. Die wichtigste Größe hierbei ist die Empfindlichkeit, also der Proportionalitätsfaktor zwischen der im gemessenen Raumwinkel auftreffenden Leuchtdichte und dem ausgegebenen Spannungswert. Erfahrungsgemäß variiert die Empfindlichkeit am stärksten von Wandler zu Wandler und bedarf daher der größten Aufmerksamkeit. Zusätzlich kann noch ein Dunkelsignal bestimmt werden, indem beispielsweise zwei unterschiedliche Leuchtdichten des diffusen Lichts gewählt werden. Auf diese Weise erhält man mehrere Punkte der Übertragungsfunktion, so daß neben der Empfindlichkeit auch das Dunkelsignal bestimmbar ist. Wird als diffuse Lichtquelle eine breitbandige Lichtquelle bzw. zumindest eine mehrfarbige Lichtquelle eingesetzt, so kann auf diese Weise auch die Farbabhängikeit der einzelnen fotoelektrischen Wandler ermittelt werden. Dies ist selbstverständlich nur bei farbtauglichen Kameras sinnvoll, die eine vektorielle Farbbestimmung ermöglichen. Auf diese Weise kann ein automatischer Weißabgleich erfolgen.

Um aus den gewonnenen elektrischen Signalen möglichst präzise Bilddaten zu ermitteln, ist es gemäß Anspruch 3 vorteilhaft, wenn die berechneten charakteristischen Eigenschaften der Übertragungsfunktion gespeichert und zur Korrektur der elektrischen Signale herangezogen werden. Der Zeitpunkt sowie der Ort dieser Korrektur ist dabei unerheblich.

Um den Dynamikbereich der Kamera durch das diffuse Licht nicht zu sehr einzugrenzen, wird die diffuse Lichtquelle vorzugsweise relativ schwach ausgelegt. Insbesondere ist daran gedacht, die diffuse Lichtquelle maximal ca. 10 % bis 20 % der maximal erlaubten Leuchtdichte auszulegen. Dies führt jedoch zu einer entsprechenden Reduktion der Genauigkeit der Erfassung der charakteristischen Eigenschaften der Übertragungsfunktion, so daß es gemäß Anspruch 4 günstig ist, die ermittelten charakteristischen Eigenschaften über mehrere Meßzyklen der Kamera zu mitteln. Da sich die charakteristischen Eigenschaften in der Regel nur sehr langsam ändern, spielt dies auch keine entscheidende Rolle. In der Regel besitzen die charakteristischen Eigenschaften lediglich eine unerwünschte Temperaturabhängigkeit, wobei sich die Temperatur höchstens im Bereich mehrerer Sekunden signifikant ändert. Die Mittelung hat außerdem den Vorteil, daß sich die zu messenden Bildsignale bei der Differenzberechnung herausmitteln. Damit können die charakteristischen Eigenschaften der Übertragungsfunktion ohne Ausblendung der zu messenden Bildsignale ermittelt werden. Dies reduziert den konstruktiven Aufwand der Kamera, da insbesondere keinerlei Blende erforderlich ist.

Zur Erzielung einer möglichst einfachen Applikation ist es gemäß Anspruch 5 vorteilhaft, wenn die charakteristischen Eigenschaften der Übertragungsfunktion aus den elektrischen Signalen der fotoelektrischen Wandler mit und ohne diffuser Beleuchtung berechnet werden. Damit muß für die diffuse Lichtquelle nur eine vorgegebene Leuchtdichte eingestellt werden.

Alternativ oder zusätzlich ist es gemäß Anspruch 6 günstig, wenn die charakteristischen Eigenschaften der Übertragungsfunktion aus den elektrischen Signalen der fotoelektrischen Wandler mit unterschiedlicher, jedoch von verschiedener diffuser Leuchtdichte berechnet werden. Hierdurch ergibt sich zwar ein erhöhter Schaltungsaufwand, man erhält jedoch mehr Informationen der Übertragungsfunktion, die somit besser korrigiert werden kann.

Die Kamera gemäß Anspruch 7 weist fotoelektrische Wandler auf, die auftreffendes Licht mit Übertragungsfunktionen in elektrische Signale umwandeln. Da diese Übertragungsfunktionen in der Regel von Wandler zu Wandler unterschiedlich sind, ist erfindungsgemäß vorgesehen, wenigstens eine charakteristische Eigenschaft dieser Übertragungsfunktionen meßtechnisch zu erfassen. Hierzu weist die Kamera mindestens eine diffuse Lichtquelle auf, deren Licht wenigstens einen Teil der fotoelektrischen Wandler beaufschlagen kann. Auf diese Weise kann die Leuchtdichte, die von den fotoelektrischen Wandlern empfangen wird, in definierter Weise angehoben werden. Aus der hieraus resultierenden, individuellen Erhöhung der elektrischen Signale der einzelnen Wandler wird in mindestens einer Recheneinheit die charakteristische Eigenschaft der Übertragungsfunktion der elektrischen Wandler berechnet. Bei Bekanntsein dieser charakteristischen Eigenschaft kann die Variation der Übertragungsfunktion von Wandler zu Wandler wenigstens teilweise rechnerisch eliminiert werden, so daß die Kamera für meßtechnische Aufgaben besser geeignet ist.

Gemäß Anspruch 8 ist es vorteilhaft, wenn die diffuse Lichtquelle zwischen den fotoelektrischen Wandlern und dem Objektiv eingekoppelt ist. Die konkrete Lage der diffusen Lichtquelle ist dabei grundsätzlich unerheblich, da das Licht der Lichtquelle beispielsweise mittels Lichtleitern, Spiegel- oder Prismensystemen an die gewünschte Stelle leitbar ist. Durch Einkopplung des diffusen Lichts zwischen dem Objektiv und dem fotoelektrischen Wandler ergibt sich eine diffuse Ausleuchtung der fotoelektrischen Wandler, so daß diese mit der diffusen Lichtquelle besonders gleichmäßig ausgeleuchtet werden. Damit kann insbesondere die Abstimmung der fotoelektrischen Wandler aufeinander besonders exakt erfolgen. Ist zudem die Leuchtdichte der diffusen Lichtquelle bekannt, kann die Kamera in absoluten fotometrischen Einheiten kalibriert werden. Auf diese Weise ist sie für meßtechnische Aufgaben hervorragend geeignet.

Je nach Ausbildung der Lichtquelle ist es gemäß Anspruch 9 vorteilhaft, wenn dieser mindestens eine Streuscheibe zugeordnet ist. Auf diese Weise kann die Ausleuchtung der fotoelektrischen Wandler vergleichmäßigt werden.

Insbesondere für Meßzwecke ist es gemäß Anspruch 10 günstig, wenn die Recheneinheit mit Speichermitteln in Wirkverbindung steht. Diese Speichermittel speichern die berechneten charakteristischen Eigenschaften der Übertragungsfunktionen, um anschließend die gemessenen elektrischen Signale der fotoelektrischen Wandler mit diesen gespeicherten Werten zu korrigieren. Vorzugsweise werden so viele charakteristische Eigenschaften der Übertragungsfunktion ermittelt, daß die Übertragungsfunktion insgesamt bekannt ist, so daß aus jedem gemessenen elektrischen Signal die exakte Leuchtdichte berechnet und ausgegeben werden kann.

Grundsätzlich reicht es aus, wenn das Licht der diffusen Lichtquelle zum normalen Kamerabild hinzuaddiert wird. Das Kamerabild wird bei der Berechnung der chrakteristischen Eigenschaft der Übertragungsfunktion vorzugsweise durch Differenzbildung der elektrischen Signale der fotoelektrischen Wandler mit und ohne diffuse Beleuchtung im wesentlichen eliminiert. Dies ist bei sich langsam ändernden Kamerabildern völlig ausreichend. Bei sich schnell periodisch ändernden Kamerabildern kann das Kamerabild durch entsprechende Mittelung eliminiert werden. In allen anderen Fällen sowie zur Erhöhung der Meßgenauigkeit ist es jedoch gemäß Anspruch 11 günstig, dem Objektiv mindestens einen Verschluß zuzuordnen. Dieser Verschluß blockt das Kamerabild, welches durch das Objektiv abgebildet wird, von den fotoelektrischen Wandlern ab, so daß diese ausschließlich die diffuse Lichtquelle erfassen. Auf diese Weise ergibt sich eine besonders exakte Ermittlung der Übertragungsfunktionen. Nachteilig hierbei ist jedoch der erhöhte bauliche Aufwand wie auch der Zeitaufwand zur Ansteuerung des Verschlusses. Letzterer kann beispielsweise durch Einsatz eines Verschlusses mit Flüssigkristallmechanismus reduziert werden.

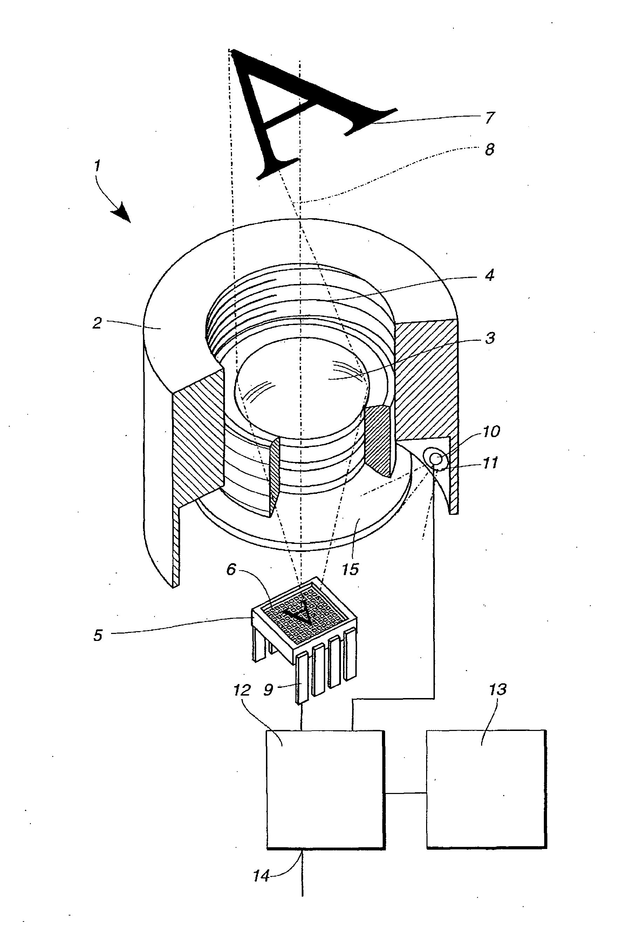

Der Erfindungsgegenstand wird beispielhaft anhand der Zeichnung erläutert, ohne den Schutzumfang zu beschränken.

Die einzige Figur zeigt eine schematische Darstellung einer Kamera 1 mit einem Gehäuse 2. In diesem Gehäuse 2 ist ein Objektiv 3 gehalten, welches mittels eines Gewindes 4 axial verschiebbar ist. Auf diese Weise kann die axiale Lage des Objektivs 3 zur Erzielung einer Scharfstellung eingestellt werden. Alternativ ist auch daran gedacht, das Objektiv 3 an einem Schiebeschlitten motorisch zu verstellen, um eine Autofokus-Vorrichtung zu realisieren.

Im Gehäuse 2 ist außerdem ein CCD-Chip 5 vorgesehen, der eine Reihe von fotoelektrischen Wandlern 6 aufweist. Diese fotoelektrischen Wandler 6 sind im dargestellten Ausführungsbeispiel matrixförmig angeordnet, wobei alternativ auch eine zeilenförmige Anordnung denkbar ist. Im letztgenannten Fall wird dabei entweder der zu betrachtende Gegenstand bewegt oder dessen Bild über einen rotierenden Spiegel oder Prisma in das Objektiv 3 eingekoppelt.

Außerhalb der Kamera 2 ist ein optisch erfaßbares Objekt 7 vorgesehen, welches Licht 8 in Richtung der Kamera 1 aussendet. Dieses Licht 8 wird durch das Objektiv 3 auf die fotoelektrischen Wandler 6 des CCD-Chips 5 abgebildet. Damit erfassen die fotoelektrischen Wandler 6 ein Pixelbild des Objekts 7. Dieses Pixelbild wird in Form von elektrischen Signalen erzeugt und über eine Ladungskopplungs-Schaltung seriell an einem Pin 9 des CCD-Chips 5 ausgegeben.

Jeder fotoelektrische Wandler 6 des CCD-Chips 5 besitzt dabei eine individuelle Übertragungsfunktion, mit der er die auftreffende Leuchtdichte in ein elektrisches Signal umwandelt. Die Abweichungen dieser Übertragungsfunktion voneinander schlagen sich in Bildungenauigkeiten nieder, die beliebig statistisch von Pixel zu Pixel des Bildes variieren. Um diese Ungenauigkeiten ausgleichen zu können, ist im Kameragehäuse 2 eine diffuse Lichtquelle 10 in Form einer LED untergebracht. Dieser diffusen Lichtquelle 10 ist eine Streuscheibe 11 nachgeordnet, die die Diffusivität dieses Lichts verbessert. Die Einkopplungsstelle der diffusen Lichtquelle 10 befindet sich dabei zwischen dem Objektiv 3 und dem CCD-Chip 5, so daß eine gleichmäßige Ausleuchtung der fotoelektrischen Wandler 6 gewährleistet ist.

Die am Pin 9 des CCD-Chips 5 ausgekoppelten elektrischen Signale werden einer Recheneinheit 12 zugeführt, die vorzugsweise von einem Mikroprozessor oder einem Mikrocontroller realisiert ist. Diese Recheneinheit 12 steuert außerdem die diffuse Lichtquelle 10 synchron zum CCD-Chip 5 an. Vorzugsweise wird nach jedem Bild oder jedem Halbbild, welches der CCD-Chip 5 aufnimmt, die diffuse Lichtquelle 10 an- bzw. abgeschaltet.

Die Rechenschaltung 12 ermittelt aus den elektrischen Signalen des CCD-Chips 5 eine charakteristische Eigenschaft der Übertragungsfunktion jedes einzelnen fotoelektrischen Wandlers 6. Hierzu bildet die Rechenschaltung 12 die Differenz der elektrischen Signale jedes einzelnen fotoelektrischen Wandlers 6 einerseits mit und andererseits ohne diffuse Beleuchtung durch die diffuse Lichtquelle 10. Da die Leuchtdichte der diffusen Lichtquelle 10 bekannt ist, ergibt sich aus dieser Differenz direkt die Empfindlichkeit jedes einzelnen fotoelektrischen Wandlers 6. Einzige Voraussetzung ist, daß zuvor ein sogenannter Dunkelabgleich gemacht wurde. Dies bedeutet, daß die elektrischen Signale ohne jeglichen Lichteinfall ermittelt werden. Diese sogenannten Dunkelströme werden von den Ausgangssignalen direkt abgezogen.

Alternativ kann die Rechenschaltung 12 auch derart arbeiten, daß die diffuse Lichtquelle 10 nicht nur an- bzw. ausgeschaltet wird, sondern zusätzlich auch verschiedene Leuchtdichten realisiert. Dies kann beispielsweise durch Vorsehen mehrerer diffuser Lichtquellen 10 geschehen, die einzeln oder miteinander betrieben werden. Alternativ kann auch der Strom durch die diffuse Lichtquelle 10 entsprechend variiert werden. In diesem Fall erhält man eine Reihe von Meßpunkten der von den einzelnen fotoelektrischen Wandlern 6 abgegebenen elektrischen Signale als Funktion der diffusen Leuchtdichte. Aus diesen Werten kann beispielsweise durch die Methode der Minimierung der Abstandsquadrate eine Fitfunktion ermittelt werden, die nicht nur die Empfindlichkeit, sondern auch das Dunkel signal der Übertragungsfunktion liefern.

Die von der Recheneinheit 12 ermittelten charakteristischen Eigenschaften der Übertragungsfunktion werden in Speichermitteln 13 gespeichert. Damit können diese gemessenen Informationen zum Korrigieren der elektrischen Signale der fotoelektrischen Wandler 6 herangezogen werden. Dazu wird die Umkehrfunktion der Übertragungsfunktion der fotoelektrischen Wandler bestimmt, so daß aus den gemessenen elektrischen Signalen individuell für jeden fotoelektrischen Wandler 6 die jeweils zutreffende Leuchtdichte berechnet werden kann. Diese berechnete Leuchtdichte wird über einen Ausgang 14 ausgegeben und kann insbesondere zu Meßzwecken herangezogen werden.

Zusätzlich ist daran gedacht, die Rechenschaltung 12 zu nutzen, um die ermittelten charakteristischen Eigenschaften der Übertragungsfunktion zu filtern. Insbesondere ist an eine Tiefpaßfilterung gedacht, um eine gleitende Mittelwertbildung dieser charakteristischen Eigenschaft in der Übertragungsfunktion zu erhalten.

Zwischen der Linse 3 und der diffusen Lichtquelle 10 ist ein Verschluß 15 vorgesehen, der sowohl mechanisch als auch elektrisch arbeiten kann. Dieser Verschluß 15 ist in der Lage, das Licht vom zu messenden Objekt 7 abzublokken, um die Erfassung der Übertragungsfunktion der fotoelektrischen Wandler 6 zu verbessern. In diesem Fall wird der Verschluß 15 immer dann geschlossen, wenn die elektrischen Signale der fotoelektrischen Wandler 6 zur Ermittlung der Übertragungsfunktion herangezogen werden. **Bezugszeichenliste**
- 1: Kamera
- 2: Gehäuse
- 3: Objektiv
- 4: Gewinde
- 5: CCD-Chip
- 6: fotoelektrischer Wandler
- 7: Objekt
- 8: Licht
- 9: Pin
- 10: diffuse Lichtquelle
- 11: Streuscheibe
- 12: Recheneinheit
- 13: Speichermittel
- 14: Ausgang
- 15: Verschluß

## Patentansprüche

1. Verfahren zum Betrieb einer Kamera (1) mit fotoelektrischen Wandlern (6), die auftreffendes Licht (8) mit Übertragungsfunktion in elektrische Signale umwandeln, **dadurch gekennzeichnet, daß** wenigstens ein Teil der fotoelektrischen Wandler (6) mit diffusem Licht beaufschlagt wird, wobei aus den mit unterschiedlicher diffuser Leuchtdichte gewonnenen elektrischen Signalen der fotoelektrischen Wandler (6) mindestens eine charakteristische Eigenschaft der Übertragungsfunktionen der fotoelektrischen Wandler (6) berechnet wird.

2. Verfahren nach Anspruch 1, **dadurch gekennzeichnet, daß** die charakteristische Eigenschaft der Übertragungsfunktionen eine Empfindlichkeit, ein Dunkelsignal und/oder eine Farbabhängigkeit der einzelnen fotoelektrischen Wandler (6) ist.

3. Verfahren nach Anspruch 1 oder 2, **dadurch gekennzeichnet, daß** die berechrieten charakteristischen Eigenschaften der Übertragungsfunktionen gespeichert und zur Korrektur der elektrischen Signale herangezogen werden.

4. Verfahren nach Anspruch 3, **dadurch gekennzeichnet, daß** die charakteristischen Eigenschaften über mehrere Meßzyklen der Kamera (1) gemittelt werden.

5. Verfahren nach mindestens einem der Ansprüche 1 bis 3, **dadurch gekennzeichnet, daß** die charakteristischen Eigenschaften der Übertragungsfunktionen aus den elektrischen Signalen der fotoelektrischen Wandler (6) mit und ohne diffuse Beleuchtung berechnet werden.

6. Verfahren nach mindestens einem der Ansprüche 1 bis 5, **dadurch gekennzeichnet, daß** die charakteristischen Eigenschaften der Übertragungsfunktionen aus den elektrischen Signalen der fotoelektrischen Wandler (6) mit unterschiedlicher, jedoch von null verschiedener diffuser Leuchtdichte berechnet werden.

7. Kamera mit fotoelektrischen Wandlern (6), die auftreffendes Licht (8) mit Übertragungsfunktionen in elektrische Signale umwandeln, **dadurch gekennzeichnet, daß** die Kamera (1) mindestens eine diffuse Lichtquelle (10) aufweist, deren Licht wenigstens einen Teil der fotoelektrischen Wandler (6) beaufschlagen kann, die mit mindestens einer Recheneinheit (12) in Wirkverbindung stehen, die mindestens eine charakteristische Eigenschaft der Übertragungsfunktion der fotoelektrischen Wandler (6) berechnet.

8. Kamera nach Anspruch 7, wobei die Kamera (1) ein Objektiv (3) aufweist, **dadurch gekennzeichnet, daß** die mindestens eine diffuse Lichtquelle (10) zwischen den fotoelektrischen Wandlern (6) und dem Objektiv (3) eingekoppelt ist.

9. Kamera nach Anspruch 7 oder 8, **dadurch gekennzeichnet, daß** der diffusen Lichtquelle (10) mindestens eine Streuscheibe (11) zugeordnet ist.

10. Kamera nach mindestens einem der Ansprüche 7 bis 9, **dadurch gekennzeichnet, daß** die Recheneinheit (12) mit Speichermitteln (13) in Wirkverbindung steht, die die berechnete, mindestens eine charakteristische Eigenschaft der Übertragungsfunktionen speichern, wobei die elektrischen Signale der fotoelektrischen Wandler (6) zur Ausgabe mit den gespeicherten Werten korrigiert sind.

11. Kamera nach mindestens einem der Ansprüche 7 bis 10, **dadurch gekennzeichnet, daß** die Kamera (1) mindestens einen Verschluß (15) aufweist.
